Europäisches Patentamt

European Patent Office

Office européen des brevets

(11) Publication number:

0 395 165
A2

# (12) EUROPEAN PATENT APPLICATION

(21) Application number: 90201020.6

(22) Date of filing: 23.04.90

(51) Int. Cl.⁵: C04B 20/12, C04B 18/04, B28B 1/44

(30) Priority: 24.04.89 NL 8901021

(43) Date of publication of application:
31.10.90 Bulletin 90/44

(84) Designated Contracting States:
AT BE CH DE DK ES FR GB GR IT LI LU NL SE

(71) Applicant: STICHTING IWL
Schiphol Centrum 7672
NL-1118 AA Amsterdam-Schiphol(NL)

(72) Inventor: Laan, Dirk
Brandenburgseplein 355
NL-6834 BK Arnhem(NL)

(74) Representative: de Wit, Gerard Frederik, Ir. et
al
Breitnerlaan 146
NL-2596 HG Den Haag(NL)

(54) Method for disposing of rest material by incorporating it in shaped articles and shaped articles manufactured according to the method.

(57) The invention provides a method for working up grains of anorganic rest materials, such as furnace or blast-furnace slags, fly ashes, ashes, cinders and crushed stone, brick or concrete, by covering the grains with a sticking material, such as resinous products, binding agents for paints, prepolymers, waterglass, or bituminous products, adhering particles of for instance sand, clay, gypsum, chark, lime, slag, ashes, fly ashes, waste rubber or cement, and binding the grains by means of a binding composition containing gypsum, plaster of Paris, lime, plaster, waterglass, settable silicates, cement, fibers, fly ashes or components to form natural or synthetic polymers which may be elastical or not, and articles made by the method.

FIG. 1

EP 0 395 165 A2

The invention relates to a method for working up anorganic rest materials by incorporating them in shaped articles, in which grains of rest materials are mixed with a binding composition and the mixture is set.

Efforts to incorporate anorganic rest materials, such as furnace slag, blast furnace slag, cinders, ashes and fly ashes resulted up till now in objects having rather inferior mechanical properties and/or a too high density and consequently a too heavy weight. Especially the content of the binding composition should be kept as low as possible in order to reduce cost and weight.

The invention aims to provide a method enabling to obtain articles of improved mechanical properties and/or a restricted quantity of binding composition.

The above aim is attained by providing that the grain's surfaces are provided with a sticking material and attaching or coupling particles after which mixing with the binding composition is carried out.

Because with the invention the attaching or coupling particles get hold on the rest material grains, which are often of irregular shape and relatively soft, a good link to the setting binding composition is obtained. The grains may be monolithic particles or granulates with a diameter of preferably from 0,5 -15 mm, but outside this region good results are often possible too.

Especially if the grains consist of a plurality of particles it often is possible to have the attaching or coupling particles to penetrate a little the grains and/or to compact them, so that in that instance a moderate compacting operation may improve the mechanical properties to a considerable extend. Especially when the grains are porous or in another way a porous product is desired, the compacting pressure has to be lower than with compacting solid concrete.

Reference is made to NL-A-7113658 reveiling the use of particles adhered by a bituminous product and waterglass to spheres of expanded resinous foam material. The purpose of the added powdery material is to prevent sticking of the spheres to each other in order to improve the mixing operation. The bad smell of the bituminous product is eliminated by the use of waterglass, which improves also the mechanical strength. A special hold of the particles or the grains, which is an important feature of the invention, is not aimed at nor obtained and in practice rather difficult to obtain with smooth spheres. Therefor it could not be predicted that with rest materials , which are irregularly shaped, very conclusive improvements could be obtained by using particles which now get an attaching and coupling function.

According to a further elaboration of the invention the mixture of the grains, articles and binding compostion is compacted before setting. It has appeared that in this instance if the mixture had no or little flowing properties, the insertion of cores into the mixture generates forces which may cause some compacting.

If the cores pass through openings in the opposing wall and such a quantity of mixture has been fed into the mould that part of the mixture is driven out with a relatively stiff mass at the exit side also a pressure increase leading to some compacting is obtained.

In many instances it is advantageous to vibrate the mixture. Vibrating a mould with steel bars as cores has proven to be very effective, possibly because steel does not absorb vibrating energy and because of the high vibration propagation velocity in steel, leading to a very diverse and fine vibration pattern. In case of a foamed composition strong vibration may be undesired in order to avoid coalesence of the foam bubbles.

To let the mixture foam any foaming agent may be used, such as the albuminous concentrate, marketed by AVEBA at Veendam, Netherlands. It is possible also to obtain the foam structure by beating.

An important embodiment of the invention consists in that one or more materials are added to the mixture which form an elastomer, such as an elastical polyurethane, rubber or artificial rubber. Even a few per cents of elastical material in the set binding composition may reduce the brittleness of the articles and a high percentage may even lead to an elastical object.

According to a further elaboration of the invention it is provided that short fibers are added to the binding composition. Preferably the fibers have a length between 0,5 and 5 mm, and it has appeared that such fibers contribute to the strength of the article, especially in case an elastical binding agent has been used. The fibers may be of any natural or synthetic material such as stone wool, glass, jute, flax and so on. A very favourable fiber is obtained by cutting or grinding a mass of low density stone wool under water until most of the fibers is less than 1 mm and drying the fibers by centrifugating them before they are added to the binding composition.

With the invention the rest material for instance may be furnace slag, blast furnace slag, cinders, ashes, fly ashes and crushed stone, brack or concrete. The sticking material may consist of resinous products, such as binding agents for paints, and prepolymers in the form of solutions, dispersions or emulsions in water or other solvents, waterglass and/or bituminous products.

The binding composition may contain gypsum or plaster of Paris, lime, plaster, waterglass, settable silicates, cement, fibers of stone wool, glass, jute and/or flax, fly ashes, sand and solutions or emulsions for forming natural or synthetic settable resins or polymers which may be elastical or not.

As materials for the attaching and coupling particles sand, clay, gypsum, chalk, lime, slag, ashes, fly ashes, waist rubber and/or cement may be used.

It is remarked that often the same material components may be used for the rest material grains,the sticking material to cover them, the binding composition and the attaching or coupling particles. So it is possible to use lly ashes not only for the rest material grains, but also in the binding composition and even as attaching and coupling particles. Waterglass or settable silicates and ingredients for obtaining elastic materials may be used to the sticking material or in the binding composition. Cement may be as well as component of the binding composition or as sticking material or even (when dry) as attaching or coupling particles.

The invention enables the manufacture of materials and objects with a great diversity of properties and at the same time to dispose of rest materials. Embodiments with a low density generally have good sound absorbing and heat insulating properties and for the latter reason are well fire proof. Articles of this type may be used in buildings as construction elements for sound or heat insulation and fire breaks.

Another application is formed by so-called sound barrier walls along high roads. Especially the embodiment with interstices caused by inserted cores may have a considerable cavity space, which is favourable for the indicated purposes.

Of course the articles obtained with the invention may be made water proof or water repellent in the same way as conventional concret. A favourable agent for this purpose is RamaSIT K.G.T., marketed by BASF.

The invention allows for a considerable pressure strength of about 50-75 N/mm$^2$ and bending strength of 10-15 N/mm$^2$, even if gypsum is the main binding agent of the binding composition.

Fly ashes may be an important component of the binding composition in case of soil stabilization, for instance.

In the following the invention is further elucidated with reference to the annexed drawing, in which:

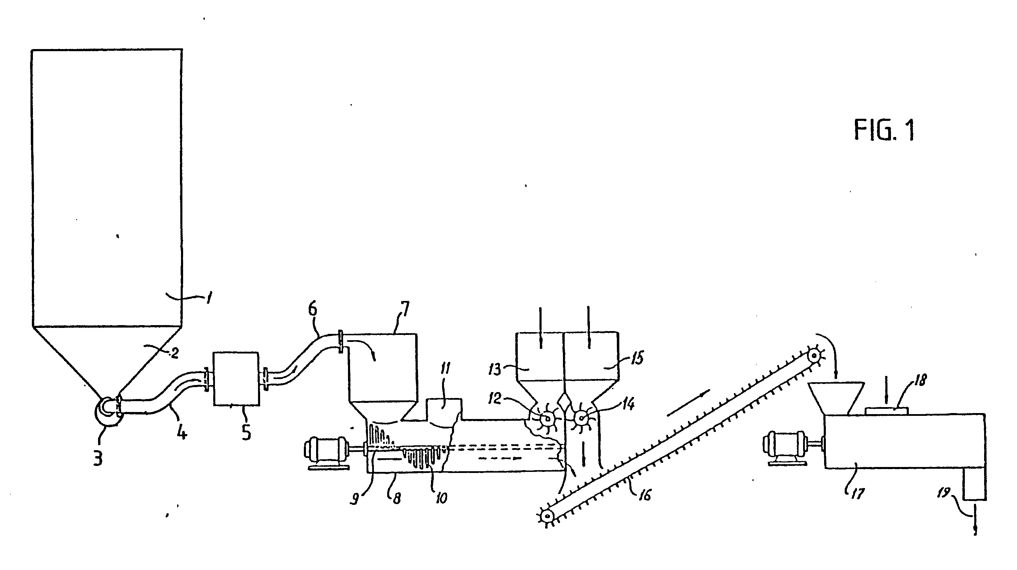

figure 1 shows a preferred device for carrying out the inventive method;

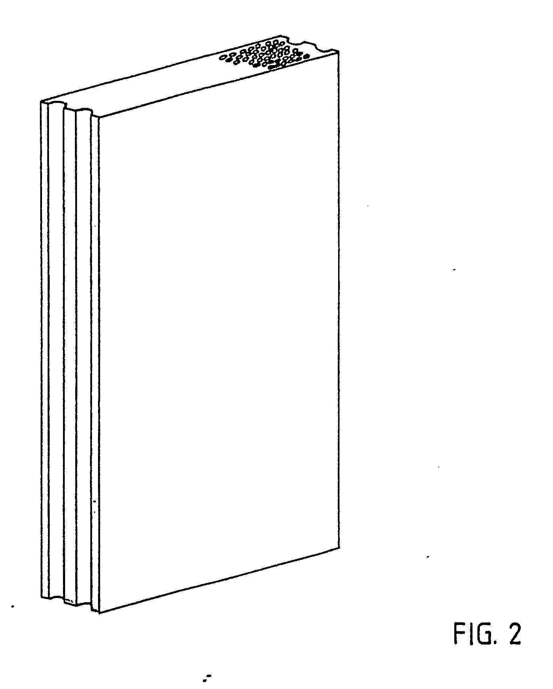

figure 2 shows an article made according to the invention; and

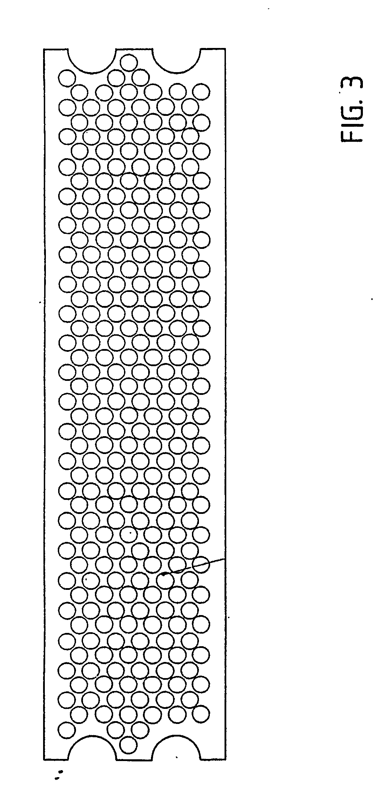

figure 3 shows a plan view of the article of fig. 2.

Grains of a rest material are stored in a bi 1. These grains may be monolithic particles or conglomerates or granulates of one or more rest materials, which may have a considerable porosity. These grains may have a diameter of preferably 0,5 to 15 mm and more especially 2-5 mm with a density of 450-750 preferably about 600 kg/m$^3$.

At the bottom of the conical lower section 2 of this bin there is provided a narrow rectangular discharge opening below which a conveyor screw is accomodated within a cylindrical housing 3 which is in direct communication with said discharge opening, said conveyor screw being driven by an electric motor which itself or of which a transmission gear mechanism is variable in speed within a broad range in order to drive the screw at a variable accurately controllable speed. The screw opens in a suction line 4 of an exhaustor 5 having a blade wheel the blades of which have rounded front edges so that the grains may pass through the exhaustor without being damaged. The exhaustor 5 will blow the grains through the line 6 to a bin 7 having a suitable vent for instance in the upper wall covered by a finely meshed sieve plate so that the air of the exhaustor may easily be discharged.

From the bin 7 the grains will drop into a first blender 8 preferably consisting of a trough having two horizontal shafts 9 running parallel to each other, each one of said shafts being provided with radially projecting pins, which pins are each arranged in a staggered pattern, so that the free ends of said pins follow a helix about the shaft. The blender 8 has a length of for instance 4 m while the pins on each one of the shafts are spaced apart at a distance of for instance 10 cm. The pins of the two shafts are in overlapping position with respect to each other i.e. that within the space between the two shafts a pin on the one shaft will slide along a pin on the other shaft, said shafts rotating in opposite directions in such a manner that the pins will have a downward movement in the space between said shafts. During a large part of the rotational movement the end of the pins will move at close distance along the trough wall. The pins make about 3 screw leads around the shaft. The shafts are rotated at a speed of about 200 rpm. At a distance of about 90 cm beyond the discharge opening of the bin 7 there opens a feeder 11 for feeding a sticking material (for instance at a temperature of about 40° C) by means of which an accurately metered quantity of said material is fed to the blender 8, said quantity being adapted to the quantity of grains supplied by the conveyor screw 3. The blending operation will now occur over a part of the path in the blender 8 whereupon at 12 a quantity of attaching or coupling particles for instance sand is fed to the blender from a hopper 13 by means of a cell wheel. Immediately before the addition of sand the grains will strongly adhere to each other due to the presence of the sticking material, the temperature at that location preferably being about 40°C. After the addition of the attaching and coupling particles and the admixing thereof with grains, there is again obtained a dry mass consisting of loose grains already at a short distance after the feeding point of the particles. The grains remain in the blender 8 for a period of from 0,5 to 1 minute there being present only grains and the sticking material in the section covered by about the first three meters and additionally the said particles in the section covered by about the last meter.

The pins 10 on the shafts 9 do not have or hardly have a conveying action in the axial direction of the blender. Hence the conveyance in the axial direction is mainly due to displacement by freshly fed material. The sticking material is fed in such a viscous liquid condition that it will flow back somewhat to the feeding station of the grains so that the feeding location of said material is not very critical. The particles are not able to move far upstream and thus not able to reach any grain not yet well coated with the sticking material due to the aggregation of grains and sticking material to larger aggregates immediately upstream of the location of the addition of the particles.

At the discharge end of the blender 8 gypsum is fed at 14 from the hopper 15 on the first part of a conveyor belt 16. Both at 12 and 14 use may be made of cell wheels. By means of the belt 16 the grains and the gypsum are transported to a second mixing apparatus 17 having a similar construction as the blender 8 though the mixing apparatus 17 may extend over a smaller length, for instance a length of 3 m, the pins thereof covering $2\frac{1}{2}$ screw leads. At a short distance from the inlet station fed by the belt 16, water and in this example an albuminous foaming agent is added at 18, the addition preferably being distributed over several points along the length of the mixing apparatus 17, for instance over a length of 1 m.

The final product is discharged from the mixing apparatus 17 at 19 whereupon the desired articles are moulded. The articles are then placed in self-supporting condition on for instance a floor and dried during a period of usually 1 hour, said drying period being dependent on the temperature.

In the above example a mixture may be used for instance of 200 kg fly ashes grains of the indicated dimensions, about 6 kg sticking material or about 5 kg sticking material and 1 kg waterglass and 50 kg particles such as sand, 350 kg gypsum and 1 kg albuminous foaming agent.

With the invention the binding composition may contain volume increasing means such as sand, gravel, stones and so on. Further it is possible to add auxiliary material such as plastifiers, fluidity increasing materials such as graphite.

## Claims

1. A method for working up anorganic rest materials by incorporating them in shaped articles, in which grains of rest materials are mixed with a binding composition and the mixture is set, characterized in that the grain's surfaces are provided with a sticking material and attaching or coupling particles after which mixing with the binding composition is carried out.

2. Method according to claim 1, characterized in that the mixture of the grains, articles and binding composition is compacted before setting.

3. Method according to claim 2, characterized in that the compacting operation is carried out by compressing the mixture in a mould.

4. Method according to claim 3, characterized in that the compressing operation in the mould is carried out by bringing the mixture into the mould and urging cores into the mixture through at least part of the walls of the mould.

5. Method according to claim 4, characterized in that the cores are bars which are moved upwardly through openings in a bottom wall of the mould and protrude from the mould through openings in an upper wall of the mould, the quantity of the mixture brought into the mould being such that part of the mixture is pressed out of the mould through said openings in the upper wall.

6. Method according to any of the preceding claims, characterized in that the mixture is vibrated.

7. Method according to any of the preceding claims, characterized in that a foaming agent is added to the mixture.

8. Method according to any of the preceding claims, characterized in that one or more materials are added to the mixture which form an elastomer, such as an elastical polyurethane, rubber or artificial rubber.

9. Method according to any of the preceding claims, characterized in that short fibers are added to the binding composition.

10. Method according to any of the preceding claims, characterized in that the rest material contains one or more materials from the group: furnace slag, blast-furnace slag, cinders, ashes, fly ashes and crushed stone, brick or concrete.

11. Method according to any of the preceding claims, characterized in that the binding composition contains one or more materials of the group: gypsum or plaster of Paris, lime, plaster, waterglass, settable silicates, cement, fibers of stone wool, glass, jute and/of flax, fly ashes, sand and solutions or emulsions for forming natural or synthetic settable resins or polymers which may be elastical or not.

12. Method according to any of the preceding claims, characterized in that the sticking material consists of resinous products, such as binding agents for paints, and prepolymers in the form of solutations, dispersions or emulsions in water or other solvents, waterglass and/or bituminous products.

13. Method according to any of the preceding claims, characterized in that the attaching or coupling particles consist in sand, clay, gypsum, chalk, lime, slag, ashes, fly ashes, waste rubber and/or cement.

14. Method according to any of the preceding claims, characterized in that anorganic rest materials in granular or granulated form are fed to a mixing line (3-19), a sticking material is fed to the line at a location (11) downstream of the feeding of the rest materials (3), still further downstream (13) attaching or coupling particles are added and still further downstream (15) a binding composition, said mixture being fed into a mould for setting.

15. Moulded article containing grains of one or more rest materials out of the group of furnace slags, blast furnace slags, cinders, ashes, fly ashes and crushed stone, brick or concrete; a sticking material out of the group of resinous products, such as binding agents for paints, and prepolymers in the form of solutions, dispersions or emulsions in water or other solvents, waterglass and/or bituminous products; attaching or coupling particles of one or more materials out of the group of sand, clay, gypsum, chalk, lime, slag, ashes, fly ashes, waste rubber and/or cement; a binding composition containing one or more materials out of the group gypsum or plaster of Paris, lime, plaster, waterglass, set silicates, cement, fibers of stone woll, glass, jute and/or flax, fly ashes, sand and set elastical or non-elastical resins or polymers.

16. Moulded article according to claim 15, characterized in that it is provided with cavities.

17. Moulded article according to claim 16 in which at least part of the cavities are ablong channels.

FIG. 1

FIG. 2

FIG. 3